Europäisches Patentamt

European Patent Office

Office européen des brevets

(11) Publication number: **0 247 822**
**A2**

## (12) EUROPEAN PATENT APPLICATION

(21) Application number: **87304634.6**

(22) Date of filing: **26.05.87**

(51) Int. Cl.⁴: **B 29 C 45/00**
**B 29 C 45/26, G 11 B 23/037**

(30) Priority: **06.06.86 JP 131273/86**
**26.05.86 JP 120433/86**

(43) Date of publication of application:
**02.12.87  Bulletin 87/49**

(84) Designated Contracting States:
**AT BE CH DE ES FR GB GR IT LI LU NL SE**

(71) Applicant: **POLYPLASTICS CO. LTD.**
**30 Azuchimachi 2-chome**
**Higashi-ku Osaka-shi (JP)**

(72) Inventor: **Sano, Terutaka**
**933-1, Nakazato**
**Fuji-shi Shizuoka (JP)**

(74) Representative: **Livsey, Gilbert Charlesworth Norris et al**
**HYDE, HEIDE & O'DONNELL 146 Buckingham Palace**
**Road**
**London SW1W 9TR (GB)**

(54) **Method of manufacturing tape reel.**

(57)  A method of making a unitary component part of a tape reel by injection molding is described. The said part is shaped to comprise a cylindrical hub (2) closed at one end by means of an end wall (5) and flanged at its other end to define a side plate (1) for the reel, with the end wall (5) being formed firstly, with an axially disposed protrusion defining a centre of rotation for the reel and secondly, with a plurality of upstanding fixing bosses (7) disposed about the protrusion. A capstan (4) for receiving tape is molded on the side plate (1) concentric with and surrounding the hub (2) with radial reinforcing ribs (3) extending between the hub (2) and the capstan (4); the wall of the capstan (4) being interrupted between a pair of the ribs (3) to leave a gap bounded by end points (9) of the wall of the capstan (4). The bosses (7) are intended for interfitment with holes in a second companion side plate (13) formed separately from and adapted subsequently to be fixed to the unitary component being molded, to form the completed tape reel.

The method of the invention is characterised in that in order to mold the said unitary reel component, resin is injected into a mold by way of an injection gate (16), said gate being located on or at the said end wall (5) at a location in sectorial regions (10 in Figures 1, 2 and 6), being two areas of the end wall (5) which are within and bounded by notional lines (and extensions thereof) connecting the axial centre of the tape reel and both end points (9) of the gap in the capstan wall (4).

The invention extends to a device for performing the said method and it encompasses components and reels made directly thereby.

**Description**

## METHOD OF MANUFACTURING TAPE REEL

This invention relates to a method of manufacturing a video tape reel, and more particularly it relates to a tape reel manufacturing method which permits manufacture of a component part of a tape reel having an improved gate position and construction with high accuracy characteristics; and the invention extends to a molding device for use in such method, and to a reel when so produced.

With the recent remarkable development of the electronics industry, the spread of household video tape recorders has been very spectacular. The demand for video tapes and parts therefor has been increasing accordingly. Whilst it is very important that these parts must be produced with good precision and at high efficiency, of these parts, tape reel parts in particular are required to be of high precision. For, while a video tape recorder stores image and sound signals into tapes and plays them back, a tape reel is a part on which such tape is wound directly and, if any slight deviation from the required precision is present in the reel, it may be a cause of tape distortion and/or crease, which will result in image distortion, noise, and so on.

According to the present invention there is provided a method of making a unitary component part of a tape reel by injection molding,

which said part is shaped to comprise a cylindrical hub closed at one end by means of an end wall and flanged at its other end to define a side plate for the reel, with the end wall being formed firstly, with an axially disposed protrusion defining a centre of rotation for the reel and secondly, with a plurality of upstanding fixing bosses disposed about the protrusion, and intended for interfitment with holes in a second companion side plate formed separately from and adapted subsequently to be fixed to the unitary component being molded, a capstan wall for receiving tape being molded on the side plate concentric with and surrounding the hub with radial reinforcing ribs extending between the hub (2) and the capstan wall; the wall of the capstan being interrupted between a pair of the ribs to leave a gap bounded by end points of the wall of the capstan;

the method being characterised in that in order to mold the said unitary reel component, resin is injected into a mold by way of an injection gate, the said gate being located on the said end wall at a location in sectorial portions, being two areas on the end wall which are within and bounded by notional lines (and extensions thereof) connecting the axial centre of the tape reel and both end points of the gap in the capstan wall.

## BRIEF DESCRIPTION OF THE DRAWINGS

Figs. 1 and 2 are plan views showing a preferred location for gate positions according to the invention;

Figs. 3 and 4 are schematic sectional views showing gating positions;

Fig. 5 is a schematic sectional view showing an opposite side plate placed on the ceiling plate;

Fig. 6 is a plan view showing gate positions for tape reel parts molded in Examples;

Fig. 7 is a view showing measurement points in configurational precision degree tests on molded tape reel parts in Examples;

Fig. 8 is a plan view of a tape reel part molded by a conventional mold;

Fig. 9 is a section taken on line A - A' in Fig. 8;

Fig. 10 is a section showing a mold for tape reel molding according to the front gate system;

Fig. 11 is a plan view showing by way of example conventional gating positions; and

Fig. 12 is a plan view showing a tape reel part according to another form of the invention.

In these drawings the parts are indicated by reference numerals as follows:-

1 - side plate
2 - cylinder
3 - reinforcing rib
4 - tape capstan wall
5 - end wall
5' - end wall recess
6 - centre boss
7 - fixing or caulking boss
10 - sectors in which gating positions should be located as taught by the invention
11.- peripheral protusion
12 - dummy boss
13 - companion side plate
16 - gate
17 - hot chip
18 - band
19 - radial rib
20 - peripheral rib
21 - stop teeth

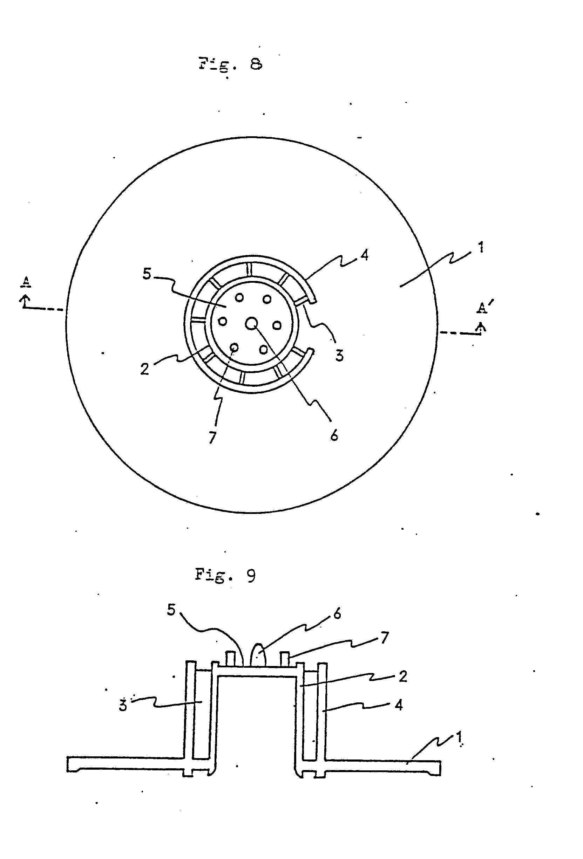

First, the construction of a typical molded unitary tape reel component part of the kind being discussed herein can be seen from the accompanying drawings, and in particular from Fig. 8 which gives a schematic view in plan of a tape reel part and Fig. 9 which gives a section taken on line A- A' in Fig. 8.

The unitary molded component part of a tape reel, the subject of this invention, includes a circular side plate 1, a cylinder 2 located in the centre thereof, and a tape core or capstan wall 4 surrounding the outer periphery of the cylinder 2 and spaced therefrom by ribs 3. There is provided, on an end wall 5 of the cylinder 2, an axial protrusion 6 which serves as a rotational centre. The unitary molded component part shown also has a plurality of fixing or caulking bosses 7 surrounding the axial protrusion 6 equally spaced therefrom.

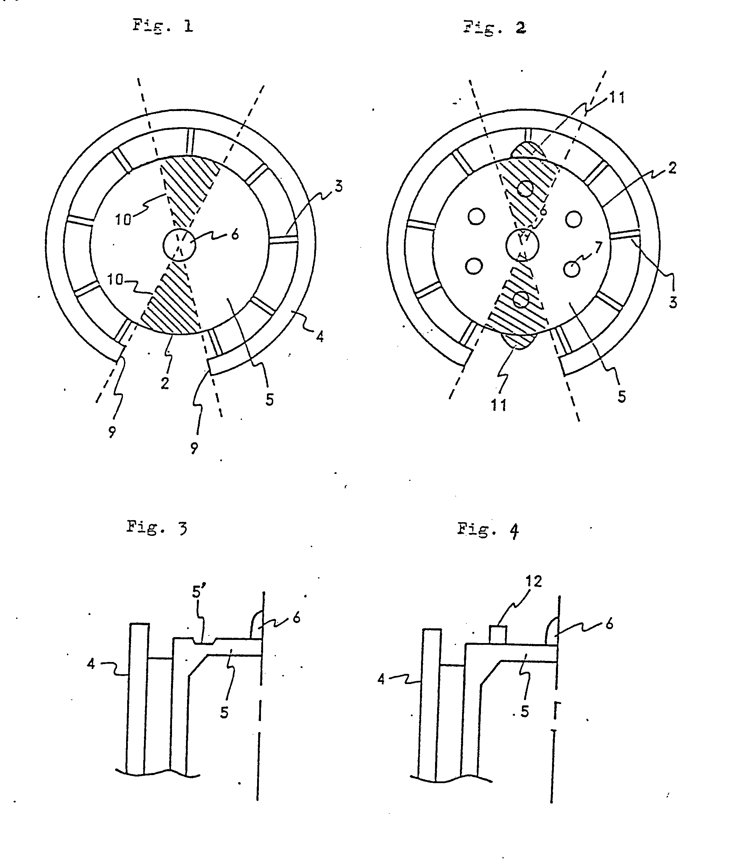

It will be noted that the capstan wall 4 is interrupted between two adjacent ribs 3, to define a gap bounded by end points 9 of the capstan wall 4 (see Figure 1).

A second separately molded side plate (not shown in Figs 8 or 9, but indicated at 9 in Fig 5), which will have holes for receiving and interfitting with the fixing bosses 7, will be joined to a unitary component part such as is shown in Figs 8 or 9, to form a complete tape reel.

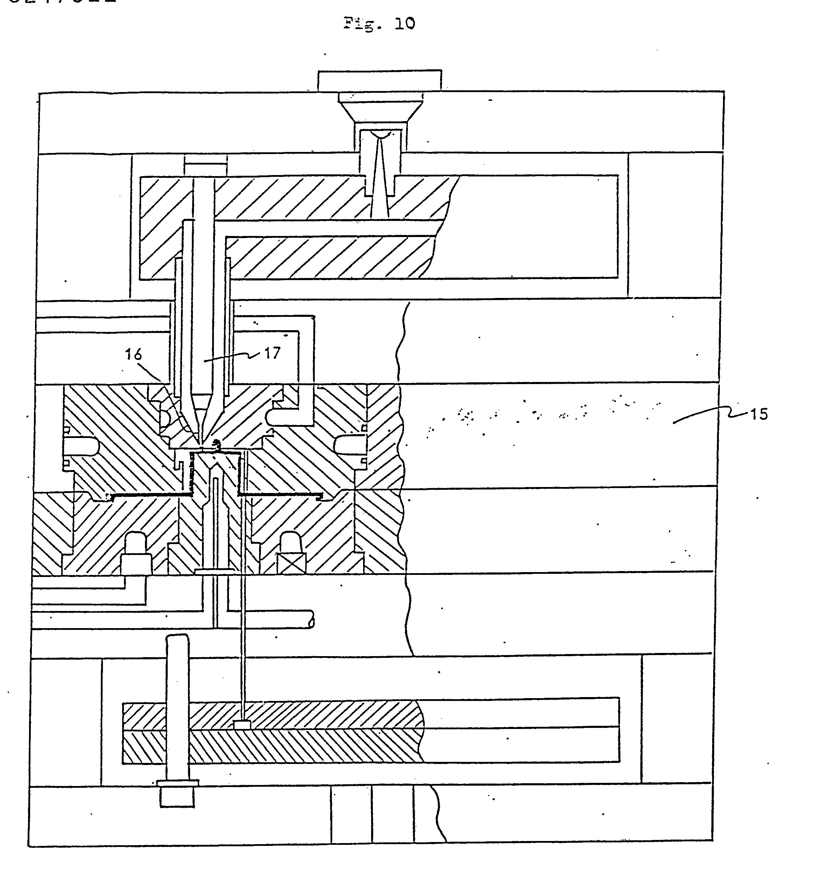

Fig. 10 shows in cross-section, a hot runner molding device generally designated 15 for molding a unitary tape reel component part, such as is shown in Figs 8 or 9, according to the front gate injection molding system. The molding device 15 has a gate 16 and a hot chip 17. Resin is injected through the gate 16 uniformly into the whole cavity, a unitary component part as shown in Figs 8 or 9, for a tape reel, being thus formed.

In the case where such tape reel part is to be made, it is needless to say that the mold as a whole must be of good precision, and in addition it is also important to determine at what location in the mold there should be provided gating through which resin is injected. The reason why gate location is important is that if injection of resin is not uniform, satisfactory cylindricality cannot be achieved for the aforesaid tape core 4 (and the cylinder 2) which elements require a very high order of cylindricality. Variations in contraction will cause distortion to the tape core and other portions and such defects are found particularly to occur when the cooling time is reduced in order to increase the number of molding cycles. Therefore, gate position selection is a most important factor which has a great bearing upon both the quality and quantity of production.

As such, research has been made on comparative gate positions in molding methods based on the front gate system, and it has been hitherto proposed to provide gating at one of the locations corresponding to the respective front ends of the caulking bosses 7 (Japanese Utility Model Publication No 58-42108). However, gating at these positions involves the following problems.

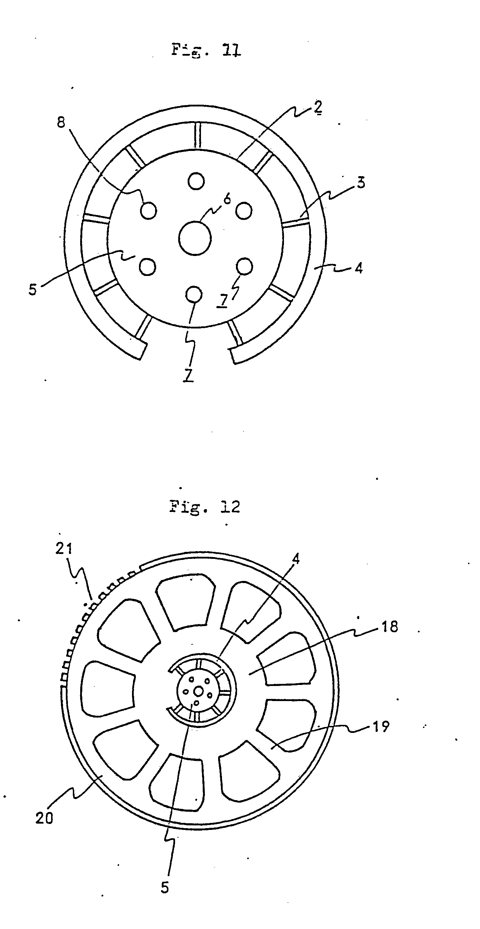

If problems are to be avoided during tape winding, a cylindricity of less than 30 microns is required. However, the cylindricity of a tape reel manufactured by setting a gate on one of the caulking bosses 7 (shown by 8 in Fig. 11), is of the order of 50-80 microns, and this may sometimes cause distortion and/or creasing of the tape during tape winding, resulting in tape damage and image distortion. Further, phenomena such as tape breaking have been observed during high-speed tape winding.

Therefore, further research has been done in order to achieve improved precision of tape core configuration.

The invention provides a method of manufacturing a component part for a tape reel component part, such as is shown in Figures 8 and 9, in which one or more gate positions is/are formed within two regions on the end wall 5 of the reel which is normal to the reel axis and carries the reel fixing bosses 7, said regions being each sectorial in shape and being areas bounded or defined by notional lines (or extensions thereof) connecting the axis of the tape reel and both ends of a gap formed in a wall 4 of a tape capstan, which wall is concentric with the reel axis.

Such molding method according to the invention will now be further described with reference to the accompanying drawings. The invention extends to a device for performing the said method and it encompasses components and reels made directly thereby.

Figures 1, 2 and 6 are schematic views showing a range of gate positions used in tape reel molding according to the invention.

Figure 1 shows diagrammatically a first preferred range of locations for gating positions for use when forming a tape reel component part by injection molding. This range is to be found as indicated in Fig 1, at or on the end wall 5 at locations in sectorial regions 10, being two areas within and bounded by notional lines (and extensions thereof) connecting the axis of the tape reel and both end points 9 of the gap in the capstan wall 4, said sectorial regions 10 being shaded in Figures 1, 2 and 6.

Gating may be located at a position to co-incide with that of a fixing or caulking boss 7 where such is present within the sectorial regions 10, and a gate may be placed on the top end of the boss.

However, when a gating position co-incides with that of a fixing or caulking boss, certain problems may be found to occur, at the point when it becomes necessary to fit the companion side reel component with the aid of the bosses 7. Firstly, where a gate is disposed above a caulking boss 7, the presence of a gate residue (a fraction of injected resin remaining in the form of a small protrusion at the time of molding), will cause the volume of the boss for caulking the gate to be larger than intended, and accordingly a caulking horn is brought into contact with more than a preset degree of pressure, with the companion side plate part, and this is liable to result in deformation of the end plate or in cracking of the companion side plate part. Another problem is that where the caulking boss is broken at the time of gate cutting, the volume of the caulking boss is smaller than intended resulting in inefficient interfitting or caulking with the companion side plate part, which is a cause of looseness with an opposite side plates of the reel being made.

For these reasons it is in many instances preferable to locate the gating position at a location away from that of any of the bosses 7, this being especially so if there is any possibility of defective caulking with an opposite side plate due to the problem of gate residue as described above.

For example having regard to these considerations, gating may be located at protrusions 11 as shown in Fig. 2 which protrusions may be provided on the outer periphery of the end wall 5 where it joins the inner cylinder 2.

Alternatively again gating may be arranged to take place at a recess 5' formed for the purpose on end wall 5 at a location within one of the two sectorial regions 10. Such a recess 5' allows for gate residue and is provided on the end wall 5 as shown in Fig. 3.

As yet another alternative, gating may be located to coincide with that of a dummy boss 12 as shown in Figure 4, and which is located in one of the sectorial regions 10. In such a case, the height of the dummy boss 12 must be lower than the centre boss 6; and preferably (see position a in Fig. 5), its top is located at or below the level of the top of an inter-fitting companion side plate 13 as shown in Fig. 5 , which illustrates the condition when the two opposite side plates have been interfitted, ( the locking bosses 7 on wall 5 of a component, such as that shown in Figures 8 and 9, having been engaged and recieved in corresponding holes of the opposite side plate such as the side plate 13), to form the completed reel.

With regard to the number of gates, either a single-point gate arrangement or a multi-point gate arrangement may be used and selection thereof may be determined in consideration of the position of each caulking boss, the configuration of the ceiling plate, and having regard to possible problems due to gate residues.

The molding method used in the tape reel manufacturing method according to the invention may be of either the hot-runner type of the cold-runner type, there being no particular limitation attached thereto.

The resin material used for the purpose of the invention may be any thermoplastic resin conventionally used. Examples of such resin include ABS, polyacetal (homo- or co-polymer), polypropylene, polyethylene, polyalkylene terephthalate, such as polybutylene terephthalate, and polyamides. Depending upon the desired properties, any known filler may be used for mixture. Particularly preferred resins are polyacetals.

As is apparent from the foregoing description and the following examples, by placing a gate at a proper location for the injection molding of a tape reel component part as now taught in this specification, it is possible to provide improved configurational precision of tape reels to be molded. Improvements in both quality and quantity are achievable.

Example 1

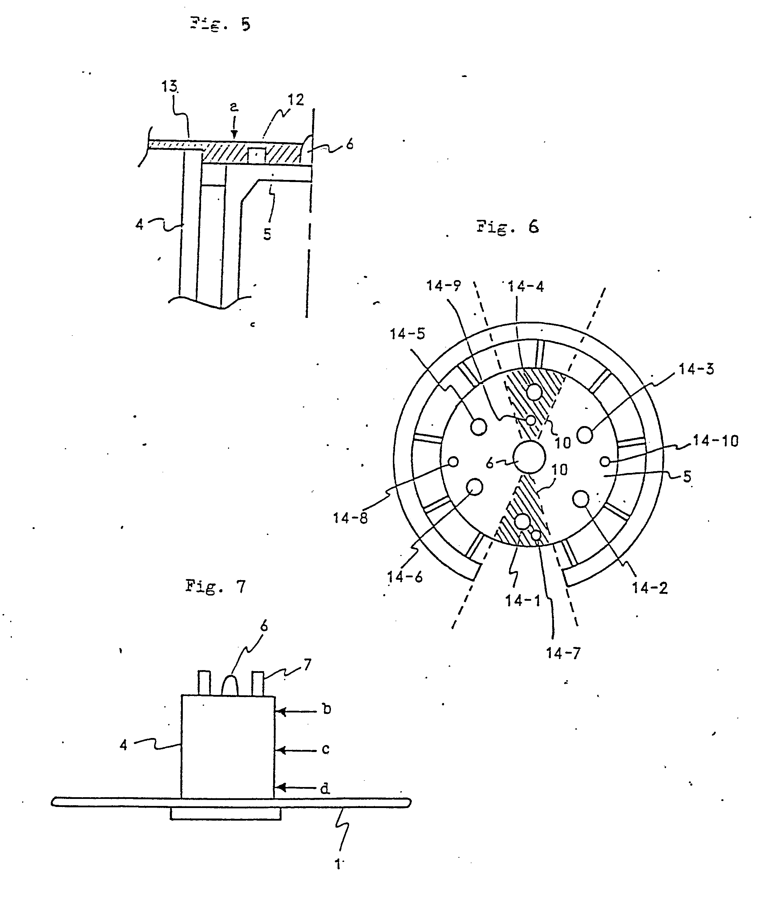

Gates were placed on the respective tops of caulking bosses shown by 14-1 ~ 14-6 in Fig. 6 and tape reels were thus molded. In order to examine the relations between the gate positions and configurational accuracy of tape core, measurements were made in respect of roundness and cylindricity. Measurements were made at three positions b, c, d in Fig. 7. roundness and cylindricity measurements were made in accordance with JIS BO621. Moulding conditions were injection pressure 700 kg/cm$^2$; injection rate 1 m/min; cycle time 10 sec. injection + 5 sec. cooling.

The results are shown in Table. 1.

Example 2

Perforated reels referred to herein are reels having through-holes bored in their tape reel side plates, there being no limitation in configuration. The tape reels used in this example (see Figure 12) were such that the tape reel side plate comprised radial ribs 19 extending from the band-like member 18 and outer peripheral ribs 20. In Fig. 12, numeral 21 designates stop teeth.

Relations between gate positions and configurational precision of tape core were examined with a perforated reel such as that shown in Fig. 12. Gates were placed on tops of caulking bosses 7 at same positions as in Example 1. Measurements were also made with gates placed on dummy bosses 12 (14-9, 14-10) as shown in Fig. 6. Measurement and molding conditions were same as in Example 1.

The results are shown in Table 2.

TABLE 1

| Config. precision | Gate position | Example | | | Comp. Example | | |
|---|---|---|---|---|---|---|---|
| | | 14-1 | 14-4 | 14-2 | 14-3 | 14-5 | 14-6 |
| | b | 15 | 18 | 25 | 28 | 25 | 27 |
| Roundness (μm) | c | 15 | 17 | 25 | 25 | 25 | 23 |
| | d | 10 | 10 | 15 | 18 | 20 | 18 |
| Cylindricity (μm) | | 25 | 25 | 50 | 65 | 60 | 55 |

It is noted here that the smaller the roundness or cylindricity value, the better. Therefore, it is apparent that the tape reels in this example are better in precision degree than those in comparative examples.

TABLE 2

| Config. precision \ Gate position | | Example | | | | Comparative Example | | | | | |
|---|---|---|---|---|---|---|---|---|---|---|---|
| | | 14'-1 | 14'-4 | 14-7 | 14-9 | 14'-2 | 14'-3 | 14'-5 | 14'-6 | 14-8 | 14-10 |
| Roundness (μm) | b | 15 | 18 | 18 | 18 | 23 | 30 | 28 | 25 | 26 | 27 |
| | c | 17 | 15 | 17 | 18 | 20 | 28 | 25 | 23 | 24 | 25 |
| | d | 10 | 10 | 10 | 13 | 15 | 20 | 18 | 15 | 19 | 17 |
| Cylindricity (μm) | | 20 | 25 | 23 | 26 | 50 | 60 | 60 | 55 | 57 | 55 |

## Claims

1. A method of making a unitary component part of a tape reel by injection molding, which said part is shaped to comprise a cylindrical hub (2) closed at one end by means of an end wall (5) and flanged at its other end to define a side plate (1) for the reel, with the end wall (5) being formed firstly, with an axially disposed protrusion defining a centre of rotation for the reel and secondly, with a plurality of upstanding fixing bosses (7) disposed about the protrusion, and intended for interfitment with holes in a second companion side plate formed separately from and adapted subsequently to be fixed to the unitary component being molded, a capstan (4) for receiving tape being molded on the side plate (1) concentric with and surrounding the hub (2) with radial reinforcing ribs (3) extending between the hub (2) and the capstan (4); the wall of the capstan (4) being interrupted between a pair of the ribs (3) to leave a gap bounded by end points (9) of the wall of the capstan (4); the method being characterised in that in order to mold the said unitary reel component, resin is injected into a mold by way of an injection gate (16), said gate being located on or at the said end wall (5) at a location in sectorial regions (10 in Figures 1, 2 and 6), being two areas on the end wall which are within and bounded by notional lines (and extensions thereof) connecting the axial centre of the tape reel and both end points (9) of the gap in the capstan wall (4).

2. A method according to claim 1, wherein a dummy boss (12) of height less than that of the centre boss (6) is molded on the wall (5) in a said sectorial portion (10) thereof, and the gate (16) is located at the free end of the dummy boss (12).

3. A method according to claim 1 or 2, wherein a protrusion (11) is molded symmetrically on or at the outer periphery of the hub (2) and a gate is located at the protrusion (11).

4. A method according to claim 3, wherein there is a pair of protrusions (11) located to opposite sides of the hub (7), each within one of said sectorial regions (10).

5. A method according to any preceding claim, wherein the resin is a polyacetal.

6. A method of making a tape reel including a step of attaching to a part made by a method as claimed in any of claims 1 to 5 a second side plate (13) having recesses corresponding to the fixing bosses (7) and in which the fixing bosses (7) are received.

7. A tape reel when formed by the method defined in claim 1, or in any claim appendant to claim 1.

8. A molding device for manufacturing, by the method defined in claim 1, a unitary component part of a tape reel by injection molding, which said part is as defined in claim 1; the molding device being characterised in that in order to mold the said unitary reel component by injection of resin by way of a molding gate, the said gate (16) is so located in the device as to be at or on the said end wall (5) of the component when molded, at locations on the end wall (5) in sectorial regions (10 in Figures 1, 2 and 6), being areas within and bounded by notional lines (and extensions thereof) connecting the axial centre of the tape reel and both end points (9) of the gap in the capstan wall (4).

9. A method of manufacturing a tape reel and a mold for use in practicing the method characterised in that in the process of injection molding a tape reel part including a tape reel side plate, a lidded cylinder disposed so as to be provided with an end opening at the centre of the side plate, a tape core surounding the outer periphery of the lidded cylinder, a protrusion provided on a ceiling plate of the lidded cylinder and serving as a rotational centre, and a plurality of caulking bosses, a gate portion is formed within areas defined by extensions connecting between the centre of the tape reel and both ends of mounts of catch pieces on the tape core and surrounded by the outer periphery of the inner cylinder (oblique-lined regions in Figs. 1 and 2), resin being injected through said gate portions for molding.

10. A method of manufacturing a tape reel as set forth in Claim 1, wherein the tape reel side plate has through-holes.

11. A method of manufacturing a tape reel as set forth in Claim 1 or 2, wherein the tape reel side plate comprises radial ribs and peripheral ribs.

0247822

Fig. 1

Fig. 2

Fig. 3

Fig. 4

0247822

Fig. 5

Fig. 6

Fig. 7

0247822

Fig. 8

Fig. 9

0247822

Fig. 10

0247822

Fig. 11

Fig. 12